# FASCICULE DE BREVET EUROPEEN

(11) **EP 3 194 811 B1**
(45) Date de publication et mention de la délivrance du brevet: **12.12.2018**
(21) Numéro de dépôt: 15753966.9
(22) Date de dépôt: 21.07.2015
(51) Int. Cl.: F16H 57/04, B60W 10/08, F16H 61/00

(54) **DISPOSITIF DE PILOTAGE D'UNE MACHINE HYDRAULIQUE ET PROCEDE DE PILOTAGE**
VORRICHTUNG ZUR STEUERUNG EINER HYDRAULISCHEN MASCHINE UND STEUERUNGSVERFAHREN
DEVICE FOR CONTROLLING A HYDRAULIC MACHINE, AND CONTROL METHOD

(30) Priorité: 14.08.2014 FR 1457808
(43) Date de publication de la demande: 26.07.2017
(73) Titulaire: PSA Automobiles SA, 78300 Poissy (FR)
(72) Inventeur: BALENGHIEN, Olivier, F-93340 Le Raincy (FR); DE PERSON, Melanie, F-94230 Cachan (FR)
(86) Numéro de dépôt international: PCT/FR2015/052001
(87) Numéro de publication internationale: WO 2016/024059

(56) Documents cités:
- DE-A1- 19 929 770
- GB-A- 2 273 323
- US-A- 3 938 409
- US-A1- 2011 166 727

## Description

Le domaine de l'invention concerne un dispositif de pilotage d'une machine hydraulique d'un groupe motopropulseur et un procédé de pilotage de la machine hydraulique.

La boite de vitesses d'un groupe motopropulseur de véhicule automobile est constituée de dentures et de roulements qu'il est nécessaire de maintenir lubrifiés lors du roulage.

Des boites de vitesses manuelles ont leur couronne de différentiel qui baigne dans de l'huile et qui projette l'huile dans la boite pour lubrifier les contacts entre les dentures de la boite de vitesses. Les goulottes récupèrent l'huile qui coule le long des parois pour l'amener aux différents roulements de la boite de vitesses.

En ce qui concerne les boites de vitesses automatiques, certaines ont une pompe à huile mécanique qui est entrainée par la rotation du convertisseur de la boite de vitesses, ce dernier étant entrainé par la rotation du moteur thermique.

Il existe également des pompes à huile électriques pour des boites de vitesses. Celles-ci sont pilotées à un régime de rotation fixe dans le but de simplifier le pilotage et optimiser le rendement énergétique de la pompe. Le choix du régime de rotation se fait en fonction du régime de rotation optimum au regard du rendement.

On connaît un document brevet FR2862365A1 décrivant un groupe motopropulseur comprenant une pompe à huile électrique. La pompe à huile électrique comprend un moteur électrique dont le régime est commandé pour augmenter la lubrification lors d'un passage de vitesse en surveillant le régime du moteur thermique.

On désigne dans la description le régime de la pompe à huile électrique, la vitesse de rotation de l'arbre de la machine électrique de la pompe, définie par exemple en tour par minute.

Les véhicules hybrides disposent d'un moteur thermique et d'une machine électrique de traction permettant un fonctionnement du véhicule en tout électrique. Le moteur thermique est alors en arrêt. Il n'est pas possible d'utiliser une pompe à huile mécanique pour un tel groupe motopropulseur car celle-ci est entrainée par le moteur thermique et par conséquent ne fonctionne pas lors d'un roulage tout électrique. Il y a donc un risque de grippage des roulements car la boite de vitesses fonctionne sans lubrification. En effet, même en roulage tout électrique, les roues avant tournant lors du déplacement du véhicule, le différentiel et l'arbre de descente de la boîte de vitesses tournent. Il y a donc un besoin de lubrification de la boîte de vitesses même en tout électrique.

L'utilisation d'une pompe à huile électrique est alors incontournable pour un véhicule hybride. Dans le cas de la demande de brevet FR2862365A1, le procédé de pilotage n'est pas adapté car le régime de la pompe est piloté uniquement à partir d'informations du régime du moteur thermique. Cette solution ne permet pas de prendre en compte les différents modes de roulage du véhicule hybride.

De plus, une pompe à huile électrique qui fonctionne à un régime constant est facilement audible lorsque le véhicule est en mode tout électrique, le bruit du moteur thermique ne couvrant pas le bruit de la pompe.

Finalement, le bruit généré par la pompe peut être perceptible pour les passagers et présenter une nuisance auditive. De plus, le fonctionnement de la pompe électrique peut ne pas être conforme aux normes acoustiques établies pour l'habitacle du véhicule.

On connaît également dans l'état de la technique le document brevet US20110166727A1 décrivant un dispositif de pilotage d'une pompe électrique d'un groupe motopropulseur de véhicule automobile hybride. L'état de fonctionnement du moteur est surveillé et un moyen de commande du régime de fonctionnement de la pompe à huile pilote la pompe à huile à un régime dépendant de l'état de fonctionnement du moteur. Lorsque le moteur est en état d'arrêt, la pompe à huile est pilotée à un régime réduit.

Cependant, la commande du régime de la pompe à huile à partir de données du régime du moteur thermique est problématique car lors d'un roulage tout électrique les besoins en lubrification peuvent être importants lorsque le moteur thermique est éteint.

Selon cette invention, le pilotage de la pompe à huile électrique impose de surveiller les variables d'état de tous les composants du groupe motopropulseur, notamment le régime du moteur thermique, la configuration de la boite de vitesses et le régime du moteur électrique, pour commander le régime de rotation de la pompe. Ceci implique une logique de calcul complexe prenant en compte le niveau de bruit généré par chaque composant et les besoins de lubrification pour chacune des situations de roulage.

On connaît le document de brevet DE-A-199 29 770 divulguant le préambule de la revendication 1.

Il existe donc un besoin d'améliorer le pilotage d'une pompe à huile électrique pour simplifier la commande du régime de fonctionnement de la pompe à huile et pour empêcher la perception du bruit du fonctionnement de la pompe tout en garantissant un niveau de lubrification suffisant.

Plus précisément, l'invention concerne un dispositif de pilotage d'une machine hydraulique d'un groupe motopropulseur de véhicule automobile comprenant un moyen de commande du régime de fonctionnement de la machine hydraulique.

Selon l'invention, il comporte également :
- un moyen pour estimer la vitesse effective du véhicule,
- un moyen pour calculer au moins une limite supérieure du régime de fonctionnement de la machine hydraulique en fonction de la vitesse effective du véhicule,
- et le moyen de commande borne le régime de fonctionnement de la machine hydraulique par la limite supérieure.

Selon une variante, la limite supérieure varie en fonction de la vitesse effective du véhicule respectivement à la relation suivante, la limite supérieure est égale à 10 ^{(Vit/ (k)+log (S0))}, avec :
- Vit pour la vitesse effective du véhicule,
- k pour un coefficient de variation autorisée du régime de fonctionnement de la machine hydraulique,
- S0 pour un régime minimum de fonctionnement de la machine hydraulique.

Selon une variante, le dispositif de pilotage comprend un moyen de détermination d'une plage de rendement optimum de la machine hydraulique pour que le moyen de commande pilote le régime de fonctionnement de la machine hydraulique dans la plage de rendement ou à la limite supérieure si la plage de rendement est au delà de la limite supérieure.

Selon une variante, le dispositif de pilotage comprend un moyen de surveillance de l'état de fonctionnement tournant ou d'arrêt d'un moteur thermique du groupe motopropulseur, et la limite supérieure est également calculée en fonction de l'état de fonctionnement du moteur.

Selon une variante, la vitesse effective du véhicule est estimée à partir de mesures issues d'un dispositif d'assistance au freinage du véhicule.

Selon une variante, le moyen pour estimer la limite supérieure du régime de fonctionnement de la machine hydraulique est un calculateur de commande d'une boite de vitesses du véhicule, un calculateur de commande d'un moteur du véhicule ou un calculateur de supervision du groupe motopropulseur.

Selon une variante, il comprend un moyen pour calculer également une limite inférieure du régime de fonctionnement de la machine hydraulique, la limite inférieure variant en fonction de données de fonctionnement du groupe motopropulseur et le moyen de commande borne le régime de fonctionnement de la machine hydraulique par la limite inférieure et la limite supérieure.

L'invention prévoit un véhicule automobile comprenant un dispositif de pilotage d'une machine hydraulique conforme à l'une des variantes précédentes.

L'invention prévoit également un procédé de pilotage d'une machine hydraulique d'un groupe motopropulseur de véhicule automobile mis en oeuvre par le dispositif de pilotage.

Selon l'invention, le procédé comprend les étapes suivantes :
- la limitation du régime de fonctionnement de la machine hydraulique par une limite supérieure ayant une première valeur,
- la détection d'une commande de variation de la vitesse effective du véhicule,
- la limitation du régime de fonctionnement de la machine hydraulique par la limite supérieure ayant une deuxième valeur calculée en fonction de la variation de la vitesse effective du véhicule.

Selon une variante, le procédé comprend également
- la détection d'une commande d'un moteur thermique du groupe motopropulseur pour une opération de démarrage ou d'arrêt du moteur,
- la limitation du régime de la machine hydraulique par la limite supérieure ayant une troisième valeur calculée en fonction de la variation de la vitesse effective du véhicule et de la commande du moteur.

Grâce à l'invention le pilotage d'une machine hydraulique est adapté au bruit masquant généré par le déplacement du véhicule. L'acoustique de l'habitacle est ainsi améliorée et permet de réduire l'utilisation des équipements d'isolation phonique du véhicule. La prise en compte du bruit masquant lié au déplacement du véhicule permet de simplifier la détermination du régime maximum de fonctionnement.

De plus, lorsque le véhicule est à vitesse réduite, le régime de la machine hydraulique est limité de sorte à empêcher sa perception par les passagers.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
La figure 1 représente un schéma d'un groupe motopropulseur de véhicule hybride et le dispositif de pilotage d'une pompe à huile électrique.
La figure 2 est un graphique représentant une loi de détermination de la limite supérieure du régime de fonctionnement de la pompe à huile en fonction de la vitesse effective.
La figure 3 est un graphique représentant une loi de commande du régime de fonctionnement de la pompe en fonction des limites de fonctionnement et d'une plage de rendement optimum.
La figure 4 représente un procédé de pilotage de la pompe à huile pour la commande du régime de fonctionnement.
La figure 5 représente un procédé de pilotage de la pompe à huile pour le calcul d'une limite du régime de fonctionnement de la pompe à huile.

L'invention s'applique préférentiellement à un véhicule hybride comprenant deux moteurs de traction. Un groupe motopropulseur hybride utilise une pompe à huile électrique pour lubrifier les parties mécaniques d'une transmission qui sont en friction lors du roulage. L'invention permet de réduire le bruit de fonctionnement de la pompe à huile électrique perçu par les passagers.

L'invention s'applique également à tout type de machine hydraulique, par exemple la pompe à huile d'un moteur hydraulique ou la pompe à huile de moteur thermique. L'invention s'applique aux groupes motopropulseurs hybrides ainsi qu'aux groupes motopropulseurs conventionnels.

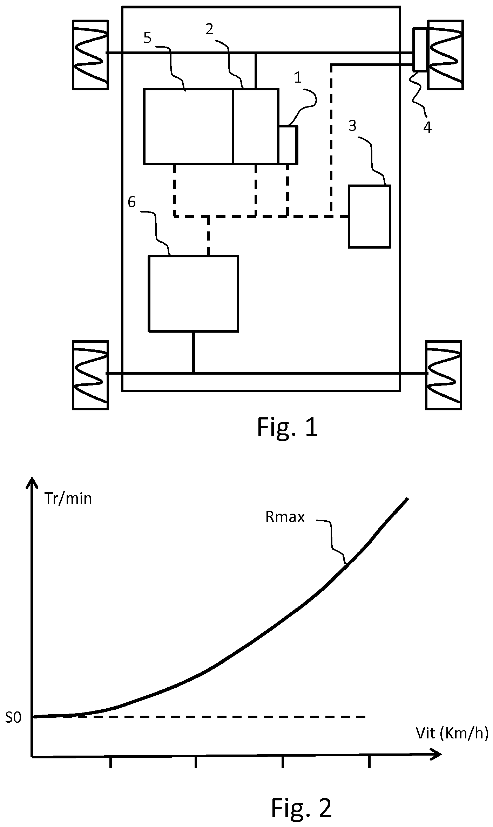

La figure 1 représente un groupe motopropulseur hybride comprenant un moteur thermique 5 attelé au train avant des roues et une machine électrique de traction 6 attelée au train arrière des roues. Le groupe motopropulseur comprend également une boite de vitesses 2 équipée de la pompe à huile électrique 1. La pompe à huile électrique 1 comprend un moteur électrique dont la rotation du rotor génère la circulation de l'huile. Plus la rotation de la boite de vitesses est importante et plus le besoin en lubrification des roulements et des engrenages est important. La lubrification empêche le grippage des pièces mécaniques.

Par ailleurs, le groupe motopropulseur comprend un calculateur de supervision 3 chargé d'exécuter les fonctions de commande des équipements du groupe motopropulseur, notamment le moteur thermique 5, la machine électrique 6, la boite de vitesses 2 et d'autres équipements non représentés sur la figure, par exemple un générateur, convertisseur de tension etc.. Le calculateur de supervision 3 exécute les fonctions dites de stratégie énergétique, de pilotage en régime et en couple du moteur thermique 5 et de la machine électrique 6 en fonction des instructions de pilotage du conducteur et des conditions de roulage. Les fonctions sont mémorisées dans des mémoires associées au calculateur de supervision 3.

Plus précisément, la pompe à huile 1 est pilotée par une commande de régime de fonctionnement du rotor. Le régime de la pompe à huile est indépendant du régime du moteur thermique 5 et du régime de la machine électrique 6 car elle dispose de son propre moteur d'entraînement. Il est connu que le niveau de bruit de la pompe à huile électrique augmente en fonction de la vitesse de rotation de son moteur électrique. Le bruit, exprimé en Décibel A, varie sensiblement selon la relation suivante : Variation bruit= 20*log(régime du rotor de la pompe à huile).

Il est connu également que le bruit masquant en intérieur du véhicule dépend du véhicule et du niveau d'insonorisation employé sur le véhicule. Le niveau de bruit masquant augmente d'environ +10 Décibel A pour une augmentation de vitesse d'environ 70km/h. Ce bruit masquant a pour origine d'une part le bruit de l'air sur la carrosserie et sur les vitres du véhicule et d'autre part le bruit des éléments roulants du véhicule, le train arrière, le train avant comprenant les pneumatiques, les roulements de roue et les transmissions transversales.

Le dispositif de pilotage de la pompe à huile consiste à exploiter le bruit masquant généré par le déplacement du véhicule pour adapter la commande de régime de fonctionnement de la pompe à huile 1 et couvrir le bruit de son fonctionnement par ce bruit masquant.

De plus, le moteur thermique 5 génère du bruit masquant. Cependant, en mode de roulage tout électrique, le moteur thermique 5 est éteint ce qui ne permet pas de couvrir le bruit de fonctionnement de la pompe à huile 1.

Le dispositif de pilotage est donc configuré pour adapter le régime de fonctionnement de la pompe à huile 1 en fonction de la vitesse effective du véhicule et de l'état de fonctionnement du moteur thermique 1, selon qu'il fonctionne en état tournant ou en état d'arrêt.

Le dispositif de pilotage de la pompe à huile électrique 1 comprend un moyen de commande du régime de fonctionnement de la pompe à huile 1. Le moyen de commande est un calculateur exécutant des fonctions de pilotage de la pompe à huile, les fonctions étant mémorisées dans une mémoire associée au calculateur. Dans ce mode de réalisation, il s'agit du calculateur de la boite de vitesses 2.

Dans une variante d'architecture de commande centralisée du groupe motopropulseur, le moyen de commande est le calculateur de supervision 3, exécutant les fonctions principales de pilotage du groupe motopropulseur.

Dans une variante pour une pompe à huile électrique du moteur thermique, le moyen de commande est le calculateur de commande du moteur thermique 1, exécutant les fonctions de pilotage spécifiques aux composants du moteur thermique.

En outre, le dispositif de pilotage de la pompe à huile électrique 1 comprend un moyen pour estimer la vitesse effective du véhicule et un moyen pour calculer au moins une limite du régime de fonctionnement de la pompe à huile 1 en fonction de la vitesse effective du véhicule. Le moyen pour estimer la vitesse effective du véhicule peut être le calculateur de supervision recevant une mesure de la vitesse effective du véhicule à partir d'un capteur de vitesse, par exemple le capteur du dispositif d'assistance au freinage 4 du véhicule.

Les limites de régime de fonctionnement de la pompe à huile sont calculées par le calculateur de la boite de vitesses, à partir des données de la vitesse effective du véhicule. Les limites de fonctionnement de la pompe à huile sont la limite supérieure et la limite inférieure du régime de fonctionnement. La limite supérieure est contrainte par le bruit maximum autorisé. La limite inférieure est contrainte par les besoins en lubrifications des pièces mécaniques de la boite de vitesses 2.

De plus, la limite supérieure est calculée à partir de données représentatives de l'état de fonctionnement tournant et l'état de fonctionnement d'arrêt du moteur thermique 5. La donnée d'état de fonctionnement est fournie par le calculateur de commande du moteur thermique 1 ou par le calculateur de supervision 3.

Plus précisément, la figure 2 représente l'évolution de la limite supérieure du régime de fonctionnement de la pompe électrique 1 calculée en fonction de la vitesse effective du véhicule. Une fonction de calcul de la limite supérieure Rmax détermine la variation de régime de la pompe à huile électrique autorisée à partir de la variation du bruit masquant lié au déplacement du véhicule, la variation du bruit masquant étant déterminée via la donnée de variation de la vitesse effective du véhicule. Parce que le bruit masquant augmente proportionnellement à la vitesse effective du véhicule, la limite de régime supérieure est calculée en fonction d'une estimation de la vitesse effective du véhicule.

Ainsi, dans un mode de réalisation, la limite supérieure du régime de fonctionnement varie en fonction de la vitesse effective du véhicule respectivement à la relation suivante, Rmax = 10 (Vit/ (k) +log(S0)), avec :
- Rmax pour la limite supérieure de régime de fonctionnement de la pompe,
- Vit pour la vitesse effective du véhicule effective,
- k pour un coefficient de variation autorisée de régime de fonctionnement de la pompe.
- S0 pour le régime minimum de fonctionnement de la pompe à huile, correspondant au régime minimum de lubrification nécessaire de la boite de vitesses à basse vitesse du véhicule.

Dans un mode de calcul préférentiel, k est sensiblement égal à 140, pour une augmentation du bruit autorisée en Décibel A équivalente à 10 décibel A par plage d'augmentation de la vitesse effective du véhicule de 70 km/h. Ainsi la limite supérieure du régime de fonctionnement de la pompe à huile augmente proportionnellement à la vitesse effective de sorte à autoriser une augmentation de son bruit de 10 Décibel A à chaque augmentation de 70km/h de la vitesse du véhicule. Le pilotage de la pompe à huile est ainsi adapté au bruit masquant généré par le déplacement du véhicule.

La valeur de la limite supérieure du régime de fonctionnement Rmax est conforme à cette dernière relation lorsque le moteur thermique est en état d'arrêt, le plus souvent à basse vitesse pour des vitesses du véhicule inférieures à 70km/h. Lors de cette situation de roulage le véhicule est en mode de roulage tout électrique.

Par exemple, lorsque le moteur thermique 5 est à l'arrêt, la limite supérieure acoustique acceptée dans l'habitacle est de 48 décibels A.

Lorsque le véhicule roule à une vitesse telle que le moteur thermique 5 entre en état de fonctionnement tournant, le bruit masquant est alors plus important d'environ 10 Décibel A et permet une augmentation du régime de fonctionnement de la pompe à huile électrique 1. Pour cela, le dispositif de pilotage comprend un moyen de surveillance de l'état de fonctionnement tournant du moteur thermique 5, intégré aux fonctions de commande de la boite de vitesses 2. Dans cette situation de roulage, le calcul de la limite supérieure varie également en fonction de l'état de fonctionnement du moteur conformément à la relation suivante : Rmax = 10^{(Vit/(k)+log(S0))} + 10 ^{(0,5+log(S0)}, la dernière partie du calcul correspondant à la composante de bruit autorisé du fait de la mise en fonctionnement du moteur thermique 5.

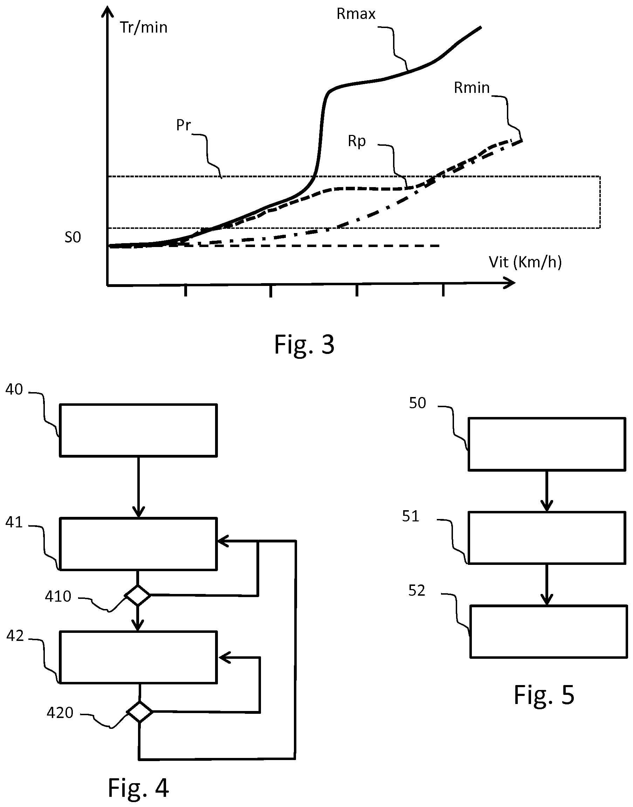

La figure 3 représente la commande de régime de fonctionnement Rp de la pompe à huile électrique 1, la limite supérieure Rmax et la limite inférieure Rmin en fonction de la vitesse effective du véhicule. De plus, une plage Pr de fonctionnement à rendement optimum de la pompe à huile électrique 3 est mémorisée et connue par le calculateur de commande de la boite de vitesses 2.

La limite inférieure Rmin détermine le régime de fonctionnement minimum pour assurer une lubrification des pièces de la boite de vitesses 2 dans de bonnes conditions. La limite inférieure Rmin varie en fonction de la vitesse du véhicule. La loi de variation de la limite inférieure Rmin peut être mémorisée dans une mémoire associée au calculateur de la boite de vitesses 2 ou du calculateur de supervision 3.

De même, la plage Pr de fonctionnement à rendement optimum de la pompe à huile électrique 3 peut être mémorisée dans une mémoire associée au calculateur de la boite de vitesses 2 ou du calculateur de supervision 3.

Ainsi, la commande Rp de régime de fonctionnement de la pompe à huile 1 est bornée par la limite supérieure Rmax et la limite inférieure Rmin. Et, lors du roulage la commande Rp est pilotée de sorte à être la plus proche de la plage Pr de rendement optimum tout en respectant la limite supérieure et inférieure. La commande du régime Rp est le résultat de plusieurs fonctions de calcul exécutées par le calculateur de la boite de vitesses selon les conditions de roulage.

L'augmentation à forte dynamique de la limite supérieure Rmax correspond à l'événement de démarrage du moteur thermique 5, située par exemple à 70km/h. Cet instant est caractérisé par le changement de la donnée d'état de fonctionnement du moteur thermique 5, passant de l'état de moteur à l'arrêt à l'état de moteur tournant. L'instant de démarrage du moteur thermique 5 peut être différent de 70km/h et dépend des conditions de roulage et des stratégies énergétiques mémorisées avec le calculateur de supervision 3.

La figure 4 représente un procédé de pilotage du régime de fonctionnement de la pompe à huile électrique. A une étape initiale 40, le véhicule automobile est à l'arrêt. La commande Rp de régime de fonctionnement de la pompe à huile est calculée par une première fonction assurant une lubrification minimum pour la situation de roulage courante. Ce régime est le résultat d'une première fonction de calcul du régime.

A une étape 41, le véhicule automobile est en situation de roulage, à basse vitesse. Les fonctions de stratégie énergétique du véhicule configurent le groupe motopropulseur en roulage tout électrique. Le moteur thermique 5 est en état d'arrêt. La machine électrique 6 assure la traction du véhicule. La commande Rp régime de fonctionnement de la pompe à huile 1 est calculée par une deuxième fonction assurant une lubrification minimum pour les conditions courantes, correspondant à la situation de roulage. Il s'agit de la limite inférieure Rmin. Le régime de fonctionnement de la pompe à huile 1 varie en fonction de la vitesse effective du véhicule et est limité par la limite supérieure Rmax, la limite supérieure Rmax variant en fonction de la vitesse. Le calcul de la commande Rp du régime de fonctionnement par la deuxième fonction est maintenu tant que le moteur thermique 5 est à l'arrêt.

L'événement 410 correspond au démarrage du moteur thermique 5 provoquant un changement du mode de calcul du régime de fonctionnement de la pompe à huile 1. A une étape 42, la commande Rp du régime de fonctionnement de la pompe est calculée par une troisième fonction prenant en compte le fonctionnement du moteur thermique 5 et autorisant une augmentation du régime de la pompe à huile 1 du fait du bruit masquant supérieur. Le régime de fonctionnement de la pompe à huile 1 varie en fonction de la vitesse effective du véhicule et est limité par la limite supérieure Rmax, la limite supérieure Rmax variant en fonction de la vitesse. Le calcul de la commande Rp du régime par la troisième fonction est maintenu tant que le moteur thermique 5 est à l'état tournant.

L'événement 420 correspond à l'arrêt du moteur thermique et provoque un retour à l'étape 41. D'autres types d'événements non représentés peuvent provoquer l'exécution d'autres étapes de calcul de la commande Rp du régime de fonctionnement.

La figure 5 représente un procédé de pilotage de la pompe à huile. A une étape 50, le dispositif de pilotage de la pompe à huile limite le régime de fonctionnement de la pompe à huile à une première valeur. Cette valeur est calculée en fonction de la vitesse du véhicule.

A une étape 51, le conducteur varie la vitesse effective du véhicule par une instruction de pilotage. La variation de vitesse effective est reçue par le calculateur de supervision 3 à partir d'une mesure du dispositif d'assistance au freinage, et est transmise pour la détermination de la limite supérieure Rmax de régime de fonctionnement de la pompe à huile au dispositif de pilotage de la pompe à huile.

A une étape 52, le dispositif de pilotage de la pompe à huile limite le régime de fonctionnement de la pompe à huile à une deuxième valeur, calculée en fonction de la variation de vitesse.

Par ailleurs, le procédé comporte également la détection d'une commande d'un moteur thermique 5 du groupe motopropulseur pour une opération de démarrage ou d'arrêt du moteur, et la limitation du régime de la pompe à huile à une troisième valeur calculée en fonction de la variation de la vitesse du véhicule et de la commande du moteur.

Les fonctions de calcul et de commande du groupe motopropulseur pour la mise en oeuvre des étapes du procédé de pilotage de la pompe à huile sont exécutées par un programme informatique mémorisé dans un circuit intégré à mémoire programmable du groupe motopropulseur, mémoire réinscriptible ou non effaçable. Il s'agit généralement du superviseur du groupe motopropulseur comprenant un dispositif de calcul à microprocesseur associé à une mémoire programmable ou des calculateurs spécifiques de commande des équipements.

L'invention permet de piloter une machine hydraulique du groupe motopropulseur de sorte que l'augmentation du bruit masquant, provoquée par l'augmentation de la vitesse du véhicule, puisse autoriser une augmentation du régime de la machine hydraulique. Le dispositif de pilotage améliore l'acoustique du véhicule au niveau de l'habitacle et l'opération de lubrification des équipements du groupe motopropulseur.

## Revendications

1. Dispositif de pilotage d'une machine hydraulique (1) d'un groupe motopropulseur de véhicule automobile comprenant un moyen de commande du régime de fonctionnement de la machine hydraulique (1), comportant également :
- un moyen pour estimer la vitesse effective du véhicule,
- un moyen pour calculer au moins une limite supérieure (Rmax) du régime de fonctionnement de la machine hydraulique (1) en fonction de la vitesse effective du véhicule,
- et en ce que le moyen de commande borne le régime de fonctionnement (Rp) de la machine hydraulique (1) par la limite supérieure (Rmax),
**caractérisé en ce que** la limite supérieure (Rmax) varie en fonction de la vitesse effective du véhicule respectivement à la relation suivante, la limite supérieure (Rmax) est égale à 10(vit/k+log(S0)), avec :
- Vit pour la vitesse effective du véhicule,
- k pour un coefficient de variation autorisée du régime de fonctionnement de la machine hydraulique (1),
- S0 pour un régime minimum de fonctionnement de la machine hydraulique.

2. Dispositif de pilotage selon la revendication 1, **caractérisé en ce qu'**il comprend un moyen de détermination d'une plage de rendement optimum (Pr) de la machine hydraulique (1) pour que le moyen de commande pilote le régime de fonctionnement (Rp) de la machine hydraulique (1) dans la plage de rendement (Pr) ou à la limite supérieure (Rmax) si la plage de rendement (Pr) est au delà de la limite supérieure (Rmax) .

3. Dispositif de pilotage selon l'une quelconque des revendications précédentes, **caractérisé en ce qu'**il comprend un moyen de surveillance de l'état de fonctionnement tournant ou d'arrêt d'un moteur thermique (5) du groupe motopropulseur, et **en ce que** la limite supérieure (Rmax) est également calculée en fonction de l'état de fonctionnement du moteur.

4. Dispositif de pilotage selon l'une quelconque des revendications précédentes, **caractérisé en ce que** la vitesse effective du véhicule est estimée à partir de mesures issues d'un dispositif d'assistance au freinage du véhicule (4).

5. Dispositif de pilotage selon l'une quelconque des revendications précédentes, **caractérisé en ce que** le moyen pour estimer la limite supérieure (Rmax) du régime de fonctionnement de la machine hydraulique est un calculateur de commande d'une boite de vitesses du véhicule (2), un calculateur de commande d'un moteur du véhicule (5) ou un calculateur de supervision (3) du groupe motopropulseur.

6. Dispositif de pilotage selon l'une quelconque des revendications précédentes, **caractérisé en ce qu'**il comprend un moyen pour calculer également une limite inférieure (Rmin) du régime de fonctionnement de la machine hydraulique (1), la limite inférieure (Rmin) variant en fonction de données de fonctionnement du groupe motopropulseur, et **en ce que** le moyen de commande borne le régime de fonctionnement (Rp) de la machine hydraulique par la limite inférieure (Rmin) et la limite supérieure (Rmax).

7. Véhicule automobile comprenant un dispositif de pilotage d'une machine hydraulique, **caractérisé en ce que** le dispositif de pilotage est conforme à l'une quelconque des revendications précédentes.

8. Procédé de pilotage d'une machine hydraulique d'un groupe motopropulseur de véhicule automobile mis en oeuvre par un dispositif de pilotage selon l'une quelconque des revendications 1 à 6, **caractérisé en ce qu'**il comprend les étapes suivantes :
- la limitation du régime de fonctionnement (Rp) de la machine hydraulique par une limite supérieure (Rmax) ayant une première valeur,
- la détection d'une commande de variation de la vitesse effective du véhicule,
- la limitation du régime de fonctionnement (Rp) de la machine hydraulique par la limite supérieure (Rmax) ayant une deuxième valeur calculée en fonction de la variation de la vitesse effective du véhicule.

9. Procédé de pilotage selon la revendication 8, **caractérisé en ce qu'**il comprend également :
- la détection d'une commande d'un moteur thermique (5) du groupe motopropulseur pour une opération de démarrage ou d'arrêt du moteur,
- la limitation du régime de la machine hydraulique par la limite supérieure (Rmax) ayant une troisième valeur calculée en fonction de la variation de la vitesse effective du véhicule et de la commande du moteur (5).

## Patentansprüche

1. Steuervorrichtung einer hydraulischen Maschine (1) eines Antriebsstranges eines Kraftfahrzeugs, ein Mittel zum Ansteuern der Betriebsdrehzahl der hydraulischen Maschine (1) umfassend, die weiter beinhaltet:
- ein Mittel zum Schätzen der tatsächlichen Fahrzeuggeschwindigkeit,
- ein Mittel zum Berechnen mindestens einer oberen Grenze (Rmax) der Betriebsdrehzahl der hydraulischen Maschine (1) in Abhängigkeit von der tatsächlichen Fahrzeuggeschwindigkeit,
- und dadurch, dass das Mittel zum Ansteuern die Betriebsdrehzahl (Rp) der hydraulischen Maschine (1) durch die obere Grenze (Rmax) beschränkt,
**dadurch gekennzeichnet, dass** die obere Grenze (Rmax) in Abhängigkeit von der tatsächlichen Fahrzeuggeschwindigkeit relativ zur folgenden Relation variiert, wobei die obere Grenze (Rmax) gleich 10^{(Geschw./k1+log(S0))} ist, mit:
- Geschw. für die tatsächliche Fahrzeuggeschwindigkeit,
- k für einen zulässigen Variationskoeffizienten der Betriebsdrehzahl der hydraulischen Maschine (1),
- S0 für eine Mindestbetriebsdrehzahl der hydraulischen Maschine.

2. Steuervorrichtung nach Anspruch 1, **dadurch gekennzeichnet, dass** sie ein Mittel zum Bestimmen eines optimalen Wirkungsgradbereichs (Pr) der hydraulischen Maschine (1) umfasst, damit das Mittel zum Ansteuern die Betriebsdrehzahl (Rp) der hydraulischen Maschine (1) in dem Wirkungsgradbereich (Pr) oder an der oberen Grenze (Rmax) steuert, wenn der Wirkungsgradbereich (Pr) über der oberen Grenze (Rmax) liegt.

3. Steuervorrichtung nach einem der vorstehenden Ansprüche, **dadurch gekennzeichnet, dass** sie ein Mittel zum Überwachen des drehenden oder angehaltenen Betriebszustands eines Verbrennungsmotors (5) des Antriebsstranges umfasst, und dadurch, dass die obere Grenze (Rmax) ebenfalls in Abhängigkeit von dem Betriebszustand des Motors berechnet wird.

4. Steuervorrichtung nach einem der vorstehenden Ansprüche, **dadurch gekennzeichnet, dass** die tatsächliche Fahrzeuggeschwindigkeit ausgehend von Messungen geschätzt wird, die aus einer Bremsunterstützungsvorrichtung des Fahrzeugs (4) stammen.

5. Steuervorrichtung nach einem der vorstehenden Ansprüche, **dadurch gekennzeichnet, dass** das Mittel zum Schätzen der oberen Grenze (Rmax) der Betriebsdrehzahl der hydraulischen Maschine ein Rechner zum Ansteuern eines Getriebes des Fahrzeugs (2), ein Rechner zum Ansteuern eines Motors des Fahrzeugs (5) oder ein Supervisionsrechner (3) des Antriebsstranges ist.

6. Steuervorrichtung nach einem der vorstehenden Ansprüche, **dadurch gekennzeichnet, dass** sie ein Mittel zum Berechnen auch einer unteren Grenze (Rmin) der Betriebsdrehzahl der hydraulischen Maschine (1) umfasst, wobei die untere Grenze (Rmin) in Abhängigkeit von den Betriebsdaten des Antriebsstranges variiert und dadurch, dass das Mittel zum Ansteuern die Betriebsdrehzahl (Rp) der hydraulischen Maschine durch die untere Grenze (Rmin) und die obere Grenze (Rmax) beschränkt.

7. Kraftfahrzeug, eine Steuervorrichtung einer hydraulischen Maschine umfassend, **dadurch gekennzeichnet, dass** die Steuervorrichtung einem der vorstehenden Ansprüche entspricht.

8. Steuerverfahren einer hydraulischen Maschine eines Antriebsstranges eines Kraftfahrzeugs, das durch eine Steuervorrichtung nach einem der Ansprüche 1 bis 6 umgesetzt wird, **dadurch gekennzeichnet, dass** es die folgenden Schritte umfasst:
- Beschränken der Betriebsdrehzahl (Rp) der hydraulischen Maschine durch die obere Grenze (Rmax), welche einen ersten Wert aufweist,
- Erfassen einer Variationsansteuerung der tatsächlichen Fahrzeuggeschwindigkeit,
- Beschränken der Betriebsdrehzahl (Rp) der hydraulischen Maschine durch die obere Grenze (Rmax), welche einen zweiten Wert aufweist, der in Abhängigkeit von der Variation der tatsächlichen Fahrzeuggeschwindigkeit berechnet wird.

9. Steuerverfahren nach Anspruch 8, **dadurch gekennzeichnet, dass** es ebenfalls umfasst:
- Erfassen einer Ansteuerung eines Verbrennungsmotors (5) des Antriebsstrangs für einen Vorgang des Startens oder Anhaltens des Motors,
- Beschränken der Drehzahl der hydraulischen Maschine durch die obere Grenze (Rmax), welche einen dritten Wert aufweist, der in Abhängigkeit von der Variation der tatsächlichen Fahrzeuggeschwindigkeit und der Ansteuerung des Motors (5) berechnet wird.

## Claims

1. Device for controlling a hydraulic machine (1) on a motor-vehicle propulsion unit, comprising a means for controlling the operating speed of the hydraulic machine (1), also comprising:
- a means for estimating the actual speed of the vehicle,
- a means for calculating at least one upper limit (Rmax) of the operating speed of the hydraulic machine (1) according to the actual speed of the vehicle,
- and in that the control means restricts the operating speed (Rp) of the hydraulic machine (1) by the upper limit (Rmax),
**characterised in that** the upper limit (Rmax) varies according to the actual speed of the vehicle or respectively to the following relationship, the upper limit (Rmax) is equal to 10 (vit/k+log(/S0)), with:
- Vit for the actual speed of the vehicle,
- k for a coefficient of authorised variation of the operating speed of the hydraulic machine (1),
- S0 for a minimum operating speed of the hydraulic machine.

2. Control device according to claim 1, **characterised in that** it comprises a means for determining an optimum efficiency range (Pr) of the hydraulic machine (1) so that the control means controls the operating speed (Rp) of the hydraulic machine (1) in the efficiency range (Pr) or at the upper limit (Rmax) if the efficiency range (Pr) is beyond the upper limit (Rmax).

3. Control device according to either of the preceding claims, **characterised in that** it comprises a means for monitoring the rotating or stopped operating state of a heat engine (5) of the propulsion unit, and **in that** the upper limit (Rmax) is also calculated according to the operating state of the engine.

4. Control device according to any of the preceding claims, **characterised in that** the actual speed of the vehicle is estimated from measurements coming from a braking-assistance device of the vehicle (4).

5. Control device according to any of the preceding claims, **characterised in that** the means for estimating the upper limit (Rmax) of the operating speed of the hydraulic vehicle is a computer controlling a gearbox (2) of the vehicle, a computer controlling an engine (5) of the vehicle or a computer (3) monitoring the propulsion unit.

6. Control device according to any of the preceding claims, **characterised in that** it comprises a means for also calculating a lower limit (Rmin) of the operating speed of the hydraulic machine (1), the lower limit (Rmin) varying according to operating data of the propulsion unit, and **in that** the control means restricts the operating speed (Rp) of the hydraulic machine by the lower limit (Rmin) and the upper limit (Rmax).

7. Motor vehicle comprising a device for controlling a hydraulic machine, **characterised in that** the control device is in accordance with any of the preceding claims.

8. Method for controlling a hydraulic machine of a motor-vehicle propulsion unit implemented by a control device according to any of claims 1 to 6, **characterised in that** it comprises the following steps:
- limitation of the operating speed (Rp) of the hydraulic machine by an upper limit (Rmax) having a first value,
- detection of a command of variation of the actual speed of the vehicle,
- limitation of the operating speed (Rp) of the hydraulic machine by the upper limit (Rmax) having a second value calculated according to the variation in the actual speed of the vehicle.

9. Control method according to claim 8, **characterised in that** it also comprises:
- detection of a control of a heat engine (5) of the propulsion unit for an operation of starting or stopping the engine,
- limitation of the speed of the hydraulic machine by the upper limit (Rmax) having a third value calculated according to the variation in the actual speed of the vehicle and the control of the engine (5).
